# EUROPEAN PATENT APPLICATION

(11) **EP 4 765 353 A1**
(43) Date of publication of application: **24.06.2026**
(21) Application number: 25219075.6
(22) Date of filing: 27.11.2025
(51) Int. Cl.: H01M 50/103, H01M 50/133, H01M 50/209, H01M 50/249, H01M 50/30

(54) **POWER STORAGE DEVICE**

(30) Priority: 23.12.2024 JP 2024226502
(71) Applicant: Toyota Jidosha Kabushiki Kaisha, Toyota-shi, Aichi-ken 471-8571 (JP); Prime Planet Energy & Solutions, Inc., Tokyo, 103-0022 (JP)
(72) Inventor: ONO, Masato, Toyota-shi, Aichi-ken,, 471-8571 (JP); OSE, Norihiro, Toyota-shi, Aichi-ken,, 471-8571 (JP); SAKASHITA, Yasuhiro, Toyota-shi, Aichi-ken,, 471-8571 (JP); YANASE, Koichi, Toyota-shi, Aichi-ken,, 471-8571 (JP); HARA, Takeru, Toyota-shi, Aichi-ken,, 471-8571 (JP); YOKOI, Yuka, Toyota-shi, Aichi-ken,, 471-8571 (JP); IMABORI, Toshiki, Tokyo,, 103-0022 (JP); UMEMURA, Kohji, Tokyo,, 103-0022 (JP); HIRANO, Yoshinori, Tokyo,, 103-0022 (JP); FUJIMURA, Satoshi, Tokyo,, 103-0022 (JP)
(74) Representative: Winter, Brandl - Partnerschaft mbB

(57) **Abstract**

The power storage device (2A) includes an electrode assembly (101), a housing case (20) that houses the electrode assembly (101), and an exhaust valve (21ab) formed on the housing case (20). The housing case (20) includes a first end plate (22), a second end plate (21a), and a peripheral wall (21b) provided between the first end plate (22) and the second end plate (21a). A portion of the peripheral wall (21b) on the side of the second end plate (21a) is thinner than a portion thereof on the side of the first end plate (22). The exhaust valve (21ab) is formed on the second end plate (21a).

## Description

### CROSS REFERENCE TO RELATED APPLICATIONS

This non-provisional application is based on Japanese Patent Application No. 2024-226502 filed on December 23, 2024 with the Japan Patent Office, the entire contents of which are hereby incorporated by reference.

### BACKGROUND

### Field

The present disclosure relates to a power storage device.

### Description of the Background Art

Various power storage cells included in a power storage device have been proposed. For example, Japanese Patent Laying-Open No. 2002-216709 discloses such a power storage cell that includes a housing case and an electrode assembly housed in the housing case. In the power storage cell, the housing case includes a first end plate provided with an electrode terminal and an exhaust valve, a second end plate, and a peripheral wall that connects the first end plate and the second end plate. A portion of the peripheral wall on the side of the second end plate is thinner than a portion thereof on the side of the first end plate. Thus, the peripheral wall on the side of the first end plate presses the electrode assembly, which prevents the electrode assembly from vibrating in the housing case. Thereby, the impact resistance of the power storage cell is improved.

It is known that gas is generated from the electrode assembly disposed inside the power storage cell during charging and discharging. The generated gas causes an internal pressure of the housing case to increase. In the power storage cell disclosed in Japanese Patent Laying-Open No. 2002-216709, since a portion of the peripheral wall is thicker on the side of the first end plate on which the exhaust valve is provided, when the internal pressure of the housing case increases, the deformation amount of a portion of the peripheral wall on the side of the second end plate is larger than a portion of the peripheral wall on the side of the first end plate. Therefore, the gas generated in the housing case tends to accumulate on the side of the second end plate. Since the exhaust valve is provided on the first end plate, the gas may not be properly discharged through the discharge valve.

### SUMMARY

The present disclosure has been made in view of the aforementioned problems, and an object of the present disclosure is to provide a power storage device capable of discharging gas generated in a housing case of a power storage cell to the outside of the housing case.

A power storage device according to an embodiment of the present disclosure includes an electrode assembly, a housing case that houses the electrode assembly, and an exhaust valve that is formed on the housing case. The housing case includes a first end plate, a second end plate, and a peripheral wall provided between the first end plate and the second end plate. A portion of the peripheral wall on the side of the second end plate is thinner than a portion thereof on the side of the first end plate. The exhaust valve is formed on the second end plate.

As described above, in the power storage device according to the present disclosure, a portion of the peripheral wall on the side of the second end plate is thinner than a portion thereof on the side of the first end plate. Since the electrode assembly is housed in the housing case, the exhaust path of the gas generated in the housing case toward the second end plate is wider than the exhaust path of the gas toward the first end plate. The exhaust valve is formed on the second end plate. As a result, it is possible to properly discharge the gas generated in the housing case of the power storage cell to the outside of the housing case.

The peripheral wall of the power storage device according to the present disclosure may have an outer wall surface and an inner wall surface. The inner wall surface may be inclined relative to the outer wall surface.

The thickness of the peripheral wall of the power storage device according to the present disclosure may be greater than the thickness of the second end plate.

The peripheral wall of the power storage device according to the present disclosure may include a first side wall, a second side wall, a first main wall, and a second main wall. The first side wall and the second side wall are spaced apart from each other in the width direction. The first main wall connects one end of the first side wall and one end of the second side wall, and the second main wall connects the other end of the first side wall and the other end of the second side wall. The thickness of the first main wall may be smaller than the thickness of the first side wall.

The peripheral wall of the power storage device according to the present disclosure may include a first side wall, a second side wall, a first main wall, and a second main wall. The first side wall and the second side wall are spaced apart from each other in the width direction. The first main wall connects one end of the first side wall and one end of the second side wall, and the second main wall connects the other end of the first side wall and the other end of the second side wall. The first main wall may be formed in such a manner that a central portion thereof in the width direction is thinner than a portion thereof on the side of the first side wall.

The power storage device according to the present disclosure may be disposed on a bottom surface of a vehicle. The power storage device may be disposed in such a manner that the first end plate faces the bottom surface of the vehicle and the second end plate faces the ground surface.

The first end plate of the power storage device according to the present disclosure may be thicker than the second end plate.

The first end plate of the power storage device according to the present disclosure may be provided with an electrode terminal.

The second end plate and the peripheral wall of the power storage device according to the present disclosure may be formed of different members.

A power storage device according to the present disclosure may include an electrode assembly, a housing case that houses the electrode assembly, and an exhaust valve that is formed on the housing case. The housing case may include a first end plate, a second end plate, and a peripheral wall provided between the first end plate and the second end plate. The peripheral wall may be formed to rise from the second end plate, and may be inclined toward the inside of the housing case. The exhaust valve may be formed on the second end plate.

The foregoing and other objects, features, aspects and advantages of the present disclosure will become more apparent from the following detailed description of the present disclosure when taken in conjunction with the accompanying drawings.

### BRIEF DESCRIPTION OF THE DRAWINGS

Fig. 1 is a schematic diagram illustrating a vehicle on which a power storage device according to an embodiment of the present disclosure is mounted.
Fig. 2 is an exploded perspective view of the power storage device according to the embodiment of the present disclosure.
Fig. 3 is a perspective view of the power storage cell according to the embodiment of the present disclosure.
Fig. 4 is an exploded perspective view of the power storage cell according to the embodiment of the present disclosure.
Fig. 5 is a cross-sectional view of the power storage cell illustrated in Fig. 3 taken along an arrow direction of line V-V.
Fig. 6 is a cross-sectional view of the power storage cell illustrated in Fig. 4 taken along an arrow direction of line VI-VI.
Fig. 7 is a cross-sectional view of the power storage cell illustrated in Fig. 4 taken along an arrow direction of line VII-VII.
Fig. 8 is a cross-sectional view of a first modification of the power storage cell according to the embodiment of the present disclosure.
Fig. 9 is a cross-sectional view of a second modification of the power storage cell according to the embodiment of the present disclosure.
Fig. 10 is a cross-sectional view of a third modification of the power storage cell according to the embodiment of the present disclosure.
Fig. 11 is a cross-sectional view of a fourth modification of the power storage cell according to the embodiment of the present disclosure.
Fig. 12 is a cross-sectional view of a fifth modification of the power storage cell according to the embodiment of the present disclosure.
Fig. 13 is a cross-sectional view of a sixth modification of the power storage cell according to the embodiment of the present disclosure.
Fig. 14 is a cross-sectional view of a seventh modification of the power storage cell according to the embodiment of the present disclosure.
Fig. 15 is a cross-sectional view of an eighth modification of the power storage cell according to the embodiment of the present disclosure.
Fig. 16 is a cross-sectional view of a ninth modification of the power storage cell according to the embodiment of the present disclosure.
Fig. 17 is a cross-sectional view of a tenth modification of the power storage cell according to the embodiment of the present disclosure.
Fig. 18 is a perspective view of a case main body included in an eleventh modification of the power storage cell according to the embodiment of the present disclosure.
Fig. 19 is a cross-sectional view of the case main body included in the eleventh modification of the power storage cell according to the embodiment of the present disclosure.
Fig. 20 is a plan view of a first modification of a bottom wall of the power storage cell according to the embodiment of the present disclosure.
Fig. 21 is a cross-sectional view of a first modification of the bottom wall of the power storage cell according to the embodiment of the present disclosure.
Fig. 22 is a plan view of a second modification of the bottom wall of the power storage cell according to the embodiment of the present disclosure.
Fig. 23 is a cross-sectional view of a second modification of the bottom wall of the power storage cell according to the embodiment of the present disclosure.
Fig. 24 is a plan view of a third modification of the bottom wall of the power storage cell according to the embodiment of the present disclosure.
Fig. 25 is a cross-sectional view of a third modification of the bottom wall of the power storage cell according to the embodiment of the present disclosure.

### DESCRIPTION OF THE PREFERRED EMBODIMENTS

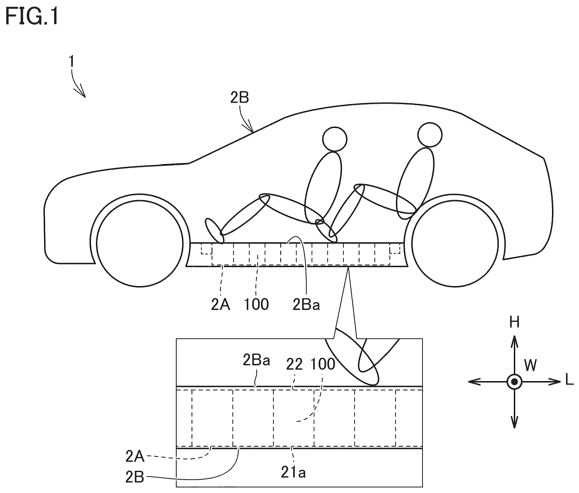

An embodiment of the present disclosure will be described with reference to Figs. 1 to 25. In the following description of the present embodiment, the same or corresponding members will be denoted by the same reference numerals, and the description thereof will not be repeated.

Fig. 1 is a diagram schematically illustrating a vehicle 1 on which a power storage device 2A is mounted. Vehicle 1 includes a vehicle main body 2B, and power storage device 2A is disposed on a bottom surface 2Ba of vehicle main body 2B.

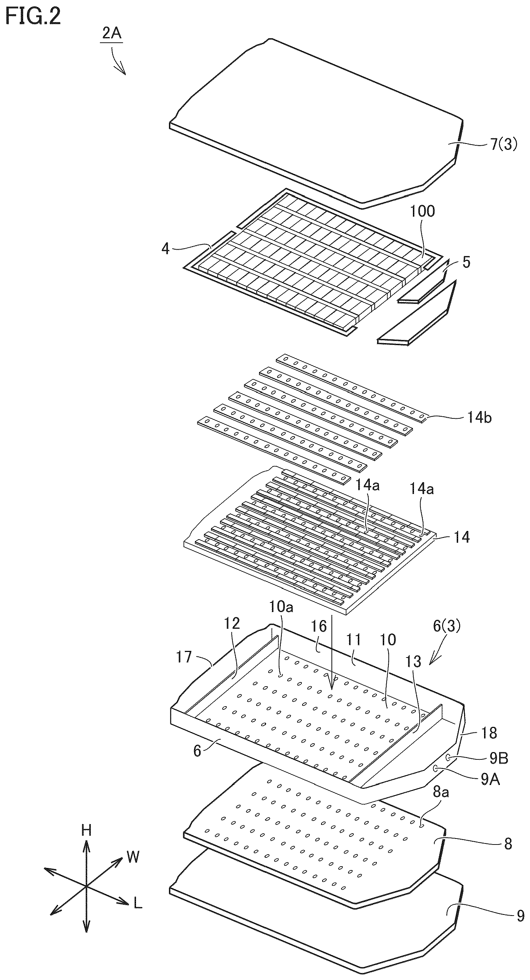

Fig. 2 is an exploded perspective view illustrating power storage device 2A. In Fig. 2, a width direction W refers to the width direction of power storage device 2A and the width direction of vehicle 1. A length direction L refers to the front-rear direction of power storage device 2A and the front-rear direction of vehicle 1. A height direction H refers to the vertical direction.

Power storage device 2A includes a housing case 3, a power storage cell 100, a cooling unit 4, and an electrical unit 5. Housing case 3 includes a lower case 6, an upper case 7, an insulating plate 8, and a share panel 9.

Lower case 6 is configured to open upward, and upper case 7 is configured to cover a plurality of openings formed on lower case 6.

Lower case 6 includes a bottom plate 10, an outer wall 11, a partition wall 12, a partition wall 13, and an insulating plate 14.

Bottom plate 10 is formed with a plurality of openings 10a. An opening 14a, an opening 10a, and an opening 8a are arranged in height direction H.

Insulating plate 8 is fixed to a lower surface of bottom plate 10. Insulating plate 8 is formed with a plurality of openings 8a.

Share panel 9 is disposed below insulating plate 8. An outer peripheral edge of share panel 9 is fixed to a lower surface of bottom plate 10. Share panel 9 is configured to cover insulating plate 8 and the lower surface of bottom plate 10.

Bottom plate 10 is formed in a plate shape. Outer wall 11 is formed along the outer peripheral edge of bottom plate 10. Outer wall 11 includes a first uprise wall 15, a second uprise wall 16, a third uprise wall 17, and a fourth uprise wall 18.

First uprise wall 15 and second uprise wall 16 are spaced apart from each other in width direction W, and first uprise wall 15 and second uprise wall 16 are configured to extend in length direction L.

Third uprise wall 17 and fourth uprise wall 18 are spaced apart from each other in length direction L, and third uprise wall 17 and fourth uprise wall 18 are configured to extend in width direction W. Third uprise wall 17 connects one end of first uprise wall 15 and one end of second uprise wall 16, and fourth uprise wall 18 connects one end of first uprise wall 15 and one end of second uprise wall 16.

Fourth uprise wall 18 is provided with a breathable member 9A and a breathable member 9B. Each of breathable member 9A and breathable member 9B is a waterproof and breathable membrane. For example, breathable members 9A and 9B are made of Gore Tex (registered trademark) or the like.

Partition wall 12 and partition wall 13 are disposed in a region surrounded by bottom plate 10 and outer wall 11. Partition wall 12 is disposed adjacent to third uprise wall 17, and partition wall 12 is configured to extend in width direction W. Partition wall 13 is spaced apart from fourth uprise wall 18 in length direction L. Fourth uprise wall 18 is also configured to extend in width direction W.

Insulating plate 14 is disposed on a portion of the upper surface of bottom plate 10 located between partition wall 12 and partition wall 13. Insulating plate 14 is formed with a plurality of openings 14a. Insulating plate 14 is provided with an insulating cover 14b that covers the plurality of openings 14a.

Power storage cell 100 is disposed on an upper surface of insulating plate 14. Electrical unit 5 is disposed between partition wall 13 and fourth uprise wall 18. A plurality of power storage cells 100 are arranged with an interval between each other in both length direction L and width direction W.

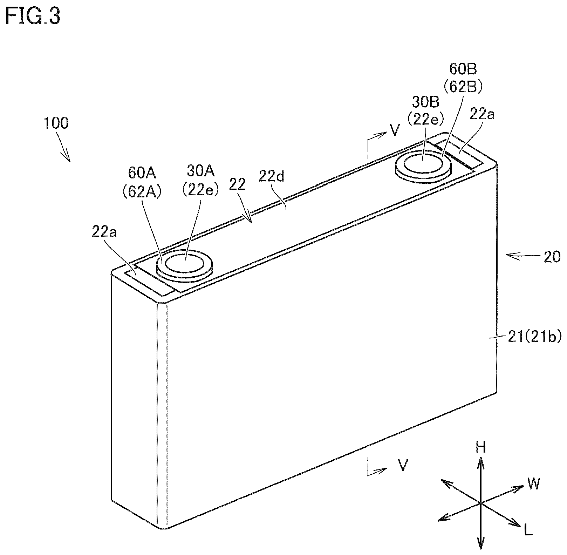

Fig. 3 is a perspective view of power storage cell 100. As illustrated in Fig. 3, power storage cell 100 according to the embodiment of the present disclosure is a prismatic battery. Power storage cell 100 may be a chargeable secondary battery such as a lithium ion battery or a nickel-metal hydride battery.

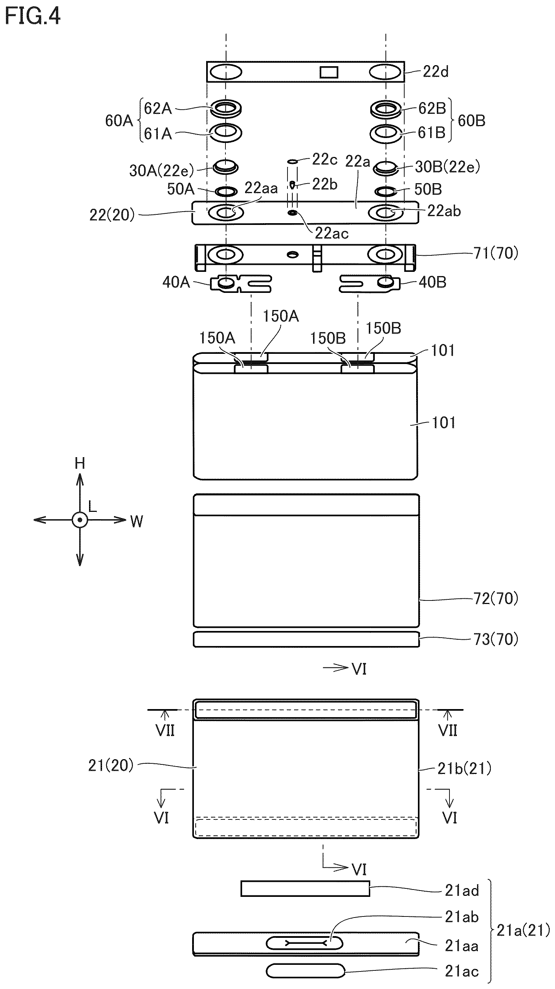

Fig. 4 is an exploded perspective view of the power storage cell according to the embodiment of the present disclosure. As illustrated in Fig. 4, power storage cell 100 includes an electrode assembly 101, a housing case 20, and an insulating member 70.

Electrode assembly 101 is a wound-type electrode assembly. More specifically, electrode assembly 101 includes a first tab 150A, a second tab 150B, a plurality of first electrodes (not shown), a plurality of second electrodes (not shown), and a plurality of separators (not shown). The first electrode, the second electrode, and the separator are each formed on a sheet. The first electrode and the second electrode are alternately laminated and wound with the separator interposed therebetween. First tab 150A is connected to each of the plurality of first electrodes. Second tab 150B is connected to each of the plurality of second electrodes.

Housing case 20 is electrically conductive. Housing case 20 is made of a metal such as aluminum. Housing case 20 houses electrode assembly 101. Housing case 20 also houses an electrolytic solution (not shown). Housing case 20 includes a case body 21 and a lid 22. Lid 22 is an example of a "first end plate" in the present disclosure.

Case body 21 includes a bottom wall 21a and a peripheral wall 21b that rises from bottom wall 21a. Bottom wall 21a and peripheral wall 21b are formed of different members. Bottom wall 21a is joined to peripheral wall 21b at an outer peripheral edge of bottom wall 21a.

Bottom wall 21a includes a bottom body 21aa, an exhaust valve 21ab, an outer protective film 21ac, and an inner protective film 21ad. Exhaust valve 21ab is formed on bottom body 21aa. Outer protective film 21ac covers exhaust valve 21ab from the outside. Inner protective film covers exhaust valve 21ab from the inside. An upper end of peripheral wall 21b is formed with an opening. Bottom wall 21a is an example of a "second end plate" in the present disclosure.

Peripheral wall 21b rises from bottom body 21aa. Peripheral wall 21b has a substantially rectangular outer shape when viewed from height direction H. Peripheral wall 21b and bottom wall 21a are arranged in height direction H. Peripheral wall 21b is made of a metal such as aluminum.

Lid 22 includes a lid body 22a, a sealing plug 22b, a plug cover 22c, an insulating cover 22d, and an electrode terminal 22e.

Lid body 22a is joined to peripheral wall 21b by welding or the like so as to close the opening of peripheral wall 21b. Electrode terminal 22e is disposed on lid body 22a. Lid body 22a is formed with a first coupling hole 22aa, a second coupling hole 22ab, and a liquid injection hole 22ac. Liquid injection hole 22ac is a through hole for injecting an electrolytic solution into case body 21 in the manufacturing process of power storage cell 100.

Sealing plug 22b seals liquid injection hole 22ac. Plug cover 22c covers liquid injection hole 22ac and sealing plug 22b.

Insulating cover 22d covers liquid injection hole 22ac, sealing plug 22b, and plug cover 22c.

Electrode terminal 22e includes a first external terminal 30A, a second external terminal 30B, a first coupling member 40A, a second coupling member 40B, a first sealing ring 50A, a second sealing ring 50B, a first terminal support member 60A, and a second terminal support member 60B.

With reference to Fig. 3 again, first external terminal 30A and second external terminal 30B are exposed to the outside of power storage cell 100.

With reference to Fig. 4 again, first coupling member 40A and second coupling member 40B are electrically conductive. At least a part of first coupling member 40A and second coupling member 40B is disposed inside housing case 20.

First external terminal 30A or first coupling member 40A is inserted into first coupling hole 22aa. First external terminal 30A and first coupling member 40A are joined to each other. First coupling member 40A is electrically connected to electrode assembly 101. Thus, first external terminal 30A is electrically connected to electrode assembly 101.

Second external terminal 30B or second coupling member 40B is inserted into second coupling hole 22ab. Second external terminal 30B and second coupling member 40B are joined to each other. Second coupling member 40B is electrically connected to electrode assembly 101. Thus, second external terminal 30B is electrically connected to electrode assembly 101.

First sealing ring 50A is provided along first coupling hole 22aa. First sealing ring 50A is provided in a gap between 1id body 22a and first external terminal 30A so as to seal the gap. Second sealing ring 50B is provided along second coupling hole 22ab. Second sealing ring 50B is provided in a gap between lid body 22a and second external terminal 30B so as to seal the gap. First sealing ring 50A and second sealing ring 50B are electrically insulating.

First terminal support member 60A is locked to lid body 22a. First terminal support member 60A supports first external terminal 30A by supporting an outer surface of first external terminal 30A. First terminal support member 60A includes a first locking ring 61A and a first covering ring 62A. First locking ring 61A extends in an annular shape so as to surround first coupling hole 22aa, and is directly locked to lid body 22a. First covering ring 62A covers first locking ring 61A. First locking ring 61A supports first external terminal 30A with first covering ring 62A interposed therebetween. First covering ring 62A is made of an electrically insulating resin member.

Second terminal support member 60B is locked to lid body 22a. Second terminal support member 60B supports second external terminal 30B by supporting an outer surface of second external terminal 30B. Second terminal support member 60B includes a second locking ring 61B and a second covering ring 62B. Second locking ring 61B extends in an annular shape so as to surround second coupling hole 22ab, and is directly locked to lid body 22a. Second covering ring 62B covers second locking ring 61B. Second locking ring 61B supports second external terminal 30B with second covering ring 62B interposed therebetween. Second covering ring 62B is made of an electrically insulating resin member.

Insulating member 70 is electrically insulating. Insulating member 70 is disposed between electrode assembly 101 and housing case 20. Insulating member 70 electrically insulates electrode assembly 101 and housing case 20 from each other. Insulating member 70 includes an insulating bracket 71, a lateral insulating member 72, and a bottom insulating member 73.

Insulating bracket 71 is disposed between electrode assembly 101 and lid body 22a. Insulating bracket 71 is relatively rigid and is in contact with both electrode assembly 101 and lid body 22a. Thus, electrode assembly 101 is fixed to housing case 20 in height direction H. Lateral insulating member 72 is disposed between electrode assembly 101 and peripheral wall 21b. Lateral insulating member 72 is formed of a film member. Bottom insulating member 73 is disposed between electrode assembly 101 and bottom wall 21a. Bottom insulating member 73 is formed of a film member. In the present embodiment, bottom insulating member 73 is bonded to electrode assembly 101.

As illustrated in Fig. 4, power storage cell 100 according to the present embodiment includes a plurality of electrode assemblies 101. Power storage cell 100 typically includes two electrode assemblies 101. The plurality of electrode assemblies 101 are arranged side by side in length direction L. Lateral insulating member 72 may integrally cover the plurality of electrode assemblies 101 so as to fix the plurality of electrode assemblies 101 to each other.

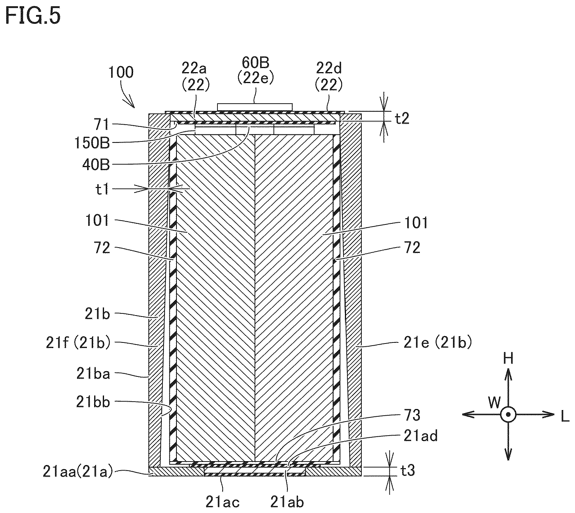

Fig. 5 is a cross-sectional view of the power storage cell illustrated in Fig. 3 taken along an arrow direction of line V-V. A portion of peripheral wall 21b on the side of bottom wall 21a is thinner than a portion thereof on the side of lid 22. In other words, a thickness t1 of a portion of peripheral wall 21b on the side of bottom wall 21a is smaller than a thickness t1 of a portion of peripheral wall 21b on the side of lid 22. More specifically, peripheral wall 21b has an outer wall surface 21ba and an inner wall surface 21bb. Outer wall surface 21ba is configured to extend from bottom wall 21a in height direction H. Inner wall surface 21bb is inclined relative to outer wall surface 21ba. A thickness t2 of lid 22 is greater than a thickness t3 of bottom wall 21a. Thickness t1 of peripheral wall 21b is greater than thickness t3 of bottom wall 21a.

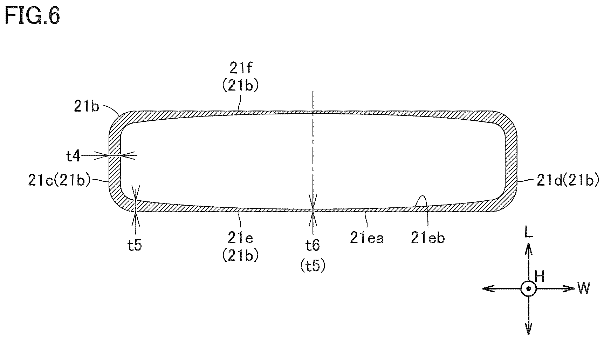

Fig. 6 is a cross-sectional view of the peripheral wall illustrated in Fig. 4 taken along an arrow direction of line VI-VI. Peripheral wall 21b includes a first side wall 21c, a second side wall 21d, a first main wall 21e, and a second main wall 21f. First side wall 21c and second side wall 21d are spaced apart from each other in width direction W. First main wall 21e connects one end of first side wall 21c and one end of second side wall 21d. Second main wall 21f connects the other end of first side wall 21c and the other end of second side wall 21d. First main wall 21e and second main wall 21f are spaced apart from each other in length direction L.

A thickness t5 of first main wall 21e is smaller than a thickness t4 of first side wall 21c. Alternatively, thickness t5 of first main wall 21e may be equal to or smaller than thickness t4 of first side wall 21c. Further, a central portion of first main wall 21e in width direction W is thinner than a portion thereof on the side of first side wall 21c. In the embodiment of the present disclosure, thickness t5 of first main wall 21e is the thinnest at the central portion in width direction W. More specifically, first main wall 21e has a main wall outer surface 21ea and a main wall inner surface 21eb. Main wall inner surface 21eb is located inside case body 21 as compared with main wall outer surface 21ea. Main wall outer surface 21ea is flat in width direction W. Main wall inner surface 21eb becomes closer to main wall outer surface 21ea as it approaches to the center in width direction W. Thickness t5 of the thinnest portion of first main wall 21e in width direction W is represented by a thickness t6 in Fig. 6.

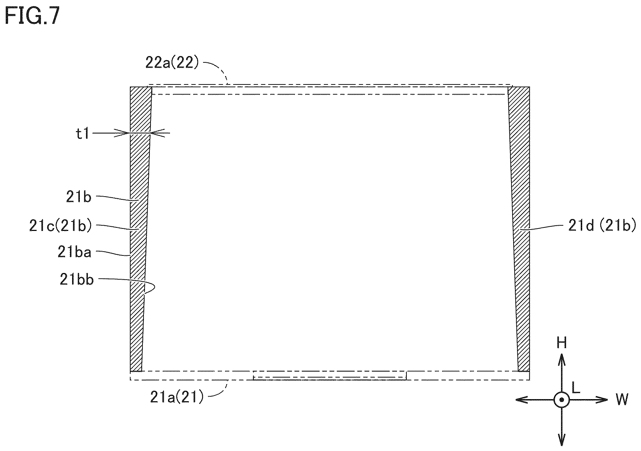

Fig. 7 is a cross-sectional view of the peripheral wall illustrated in Fig. 4 taken along an arrow direction of line VII-VII. A portion of peripheral wall 21b on the side of bottom wall 21a is thinner than a portion thereof on the side of lid 22. In other words, thickness t1 of a portion of peripheral wall 21b on the side of bottom wall 21a is smaller than thickness t1 of a portion of peripheral wall 21b on the side of lid 22. More specifically, peripheral wall 21b has an outer wall surface 21ba and an inner wall surface 21bb. Outer wall surface 21ba is configured to extend from bottom wall 21a in height direction H. Inner wall surface 21bb is inclined relative to outer wall surface 21ba.

With reference to Fig. 1 again, power storage cell 100 is disposed in power storage device 2A in such a manner that lid 22 faces bottom surface 2Ba of vehicle 1 and bottom wall 21a faces the ground surface.

In power storage cell 100 included in power storage device 2A according to the embodiment of the present disclosure, thickness t1 of a portion of peripheral wall 21b on the side of bottom wall 21a is thinner than thickness t1 of a portion of peripheral wall 21b on the side of lid 22. Bottom wall 21a is provided with an exhaust valve 21ab. A gap is formed between electrode assembly 101 and peripheral wall 21b on the side of bottom wall 21a. Thereby, a path is secured for the gas generated from electrode assembly 101 housed in power storage cell 100 to flow to exhaust valve 21ab. As a result, power storage cell 100 can properly discharge the gas generated in housing case 20 to the outside of housing case 20.

In addition, the gas generated from electrode assembly 101 causes the internal pressure of housing case 20 to increase. Since thickness t1 of a portion of peripheral wall 21b on the side of bottom wall 21a is smaller than thickness t1 of a portion of peripheral wall 21b on the side of lid 22, when the internal pressure of the housing case increases, the deformation amount of a portion of peripheral wall 21b that deforms from the inside of housing case 20 toward the outside thereof on the side of bottom wall 21a is larger than a portion of peripheral wall 21b on the side of lid 22. Since a gap is formed between electrode assembly 101 and peripheral wall 21b on the side of bottom wall 21a, a path is secured for the gas generated from electrode assembly 101 housed in power storage cell 100 to flow to exhaust valve 21ab. As a result, power storage cell 100 can properly discharge the gas generated in housing case 20 to the outside of housing case 20.

Inner wall surface 21bb of peripheral wall 21b of power storage cell 100 according to the embodiment of the present disclosure is inclined relative to outer wall surface 21ba. This makes it possible to smoothly insert electrode assembly 101 into housing case 20.

Thickness t1 of any portion of peripheral wall 21b of power storage cell 100 according to the embodiment of the present disclosure is greater than thickness t3 of bottom wall 21a. Thus, it is possible to prevent peripheral wall 21b from being destroyed before bottom wall 21a by an increase in the internal pressure of housing case 20 caused by the gas generated from electrode assembly 101.

Thickness t5 of first main wall 21e of power storage cell 100 according to the embodiment of the present disclosure is smaller than thickness t4 of first side wall 21c. Thus, when the internal pressure of housing case 20 increases, it is possible to prevent the deformation amount of first side wall 21c from becoming larger than the deformation amount of first main wall 21e. As a result, it is possible to maintain first side wall 21c in contact with electrode assembly 101 housed in housing case 20 when the internal pressure of housing case 20 increases. Accordingly, even when the internal pressure of housing case 20 increases, electrode assembly 101 can be prevented from vibrating in housing case 20.

In power storage cell 100 according to the embodiment of the present disclosure, a central portion of first main wall 21e in width direction W is thinner than a portion thereof on the side of first side wall 21c. Accordingly, a gap is formed between peripheral wall 21b and electrode assembly 101 at the central portion of first main wall 21e in width direction W. In other words, a path is secured for the gas generated in housing case 20 to flow to exhaust valve 21ab. Accordingly, it is possible to properly discharge the gas generated in housing case 20 to the outside of housing case 20.

With reference to Fig. 1, power storage device 2A is disposed on bottom surface 2Ba of vehicle 1. Power storage cell 100 is disposed in power storage device 2A in such a manner that lid 22 of power storage cell 100 faces bottom surface 2Ba and bottom wall 21a of power storage cell 100 faces the ground surface. Accordingly, it is possible to prevent bottom surface 2Ba from hindering the discharge of the gas from exhaust valve 21ab provided on bottom wall 21a. In addition, it is also possible to prevent the gas generated in housing case 20 from flowing into the interior space of vehicle 1.

In power storage cell 100 according to the embodiment of the present disclosure, thickness t3 of bottom wall 21a is smaller than thickness t2 of lid 22. As a result, when the internal pressure of housing case 20 is increased by the gas generated from electrode assembly 101, it is possible to prevent the deformation amount of bottom wall 21a from becoming smaller than the deformation amount of lid 22. Thus, bottom wall 21a deforms due to an increase in the internal pressure of housing case 20, and thereby the gas generated from electrode assembly 101 can easily accumulate on the side of bottom wall 21a. Thus, power storage cell 100 can properly discharge the gas generated in housing case 20 to the outside of housing case 20.

In power storage cell 100 according to the embodiment of the present disclosure, bottom wall 21a is provided with an exhaust valve 21ab, and lid 22 is provided with a first terminal support member 60A and a second terminal support member 60B. Accordingly, it is possible to prevent first external terminal 30A and second external terminal 30B from being short-circuited by debris or the like contained in the gas discharged from exhaust valve 21ab.

### <First Modification>

In power storage cell 100 according to the embodiment described above, it is described that peripheral wall 21b rises from bottom body 21aa in the vertical direction, and thickness t1 of a portion of peripheral wall 21b on the side of bottom wall 21a is smaller than thickness t1 of a portion of peripheral wall 21b on the side of lid 22, but the present disclosure is not limited thereto. For example, thickness t1 of peripheral wall 21b may be uniform, peripheral wall 21b may be configured to rise from bottom body 21aa, and may be inclined toward a central portion of housing case 20.

Hereinafter, a power storage cell 110, which is a modification of power storage cell 100, will be described. Power storage cell 110 has substantially the same configuration as power storage cell 100 except for peripheral wall 21b.

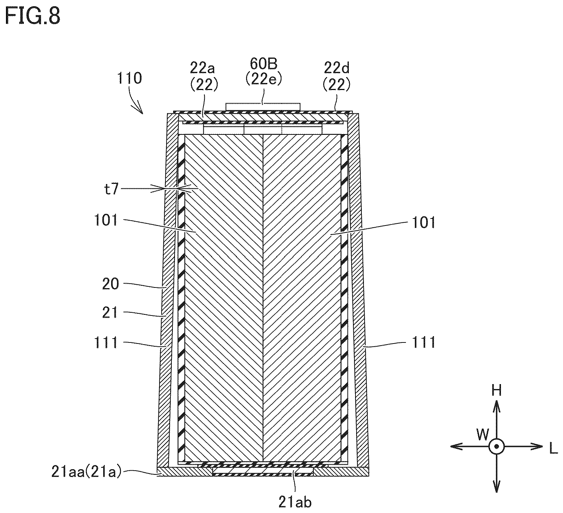

Fig. 8 is a cross-sectional view of power storage cell 110, which is a first modification of the power storage cell according to the embodiment of the present disclosure, and the cross-sectional view being taken along an arrow direction of line V-V at the same position as the cross-sectional view of the power storage cell illustrated in Fig. 3. Housing case 20 of power storage cell 110 includes a case body 21 and a lid 22. Case body 21 includes a bottom wall 21a and a peripheral wall 111 that rises from bottom wall 21a. Peripheral wall 111 is inclined toward the inner side of housing case 20 from an end portion of case body 21 on the side of bottom wall 21a in the vertical direction. A thickness t7 of peripheral wall 111 is uniform.

Accordingly, electrode assembly 101 is pressed by peripheral wall 111 on the side of lid 22, which prevents electrode assembly 101 from vibrating in housing case 20. Thereby, the impact resistance of power storage cell 110 is improved. In addition, since a gap is formed between peripheral wall 111 and electrode assembly 101 on the side of bottom wall 21a, a path is secured for the gas generated in housing case 20 to flow to exhaust valve 21ab. As a result, power storage cell 110 can properly discharge the gas generated in housing case 20 to the outside of housing case 20.

### <Second Modification>

In the above embodiment, it is described that inner wall surface 21bb of power storage cell 100 is inclined relative to outer wall surface 21ba, and thereby thickness t1 of a portion of peripheral wall 21b on the side of bottom wall 21a is smaller than thickness t1 of a portion of peripheral wall 21b on the side of lid 22, but the present disclosure is not limited thereto. For example, thickness t1 of a portion of peripheral wall 21b on the side of bottom wall 21a is smaller than thickness t1 of a portion of peripheral wall 21b on the side of lid 22 by causing inner wall surface 21bb to approach to outer wall surface 21ba in a stepwise manner from the portion of peripheral wall 21b on the side of lid 22 toward the portion of peripheral wall 21b on the side of bottom wall 21a.

Hereinafter, a power storage cell 120, which is a modification of power storage cell 100, will be described. Power storage cell 120 has substantially the same configuration as power storage cell 100 except for the shape of inner wall surface 21bb.

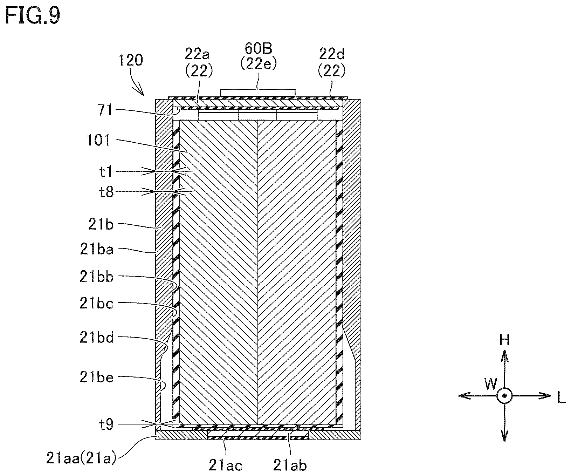

Fig. 9 is a cross-sectional view of power storage cell 120, which is a second modification of the power storage cell according to the embodiment of the present disclosure, and the cross-sectional view being taken along an arrow direction of line V-V at the same position as the cross-sectional view of the power storage cell illustrated in Fig. 3. Inner wall surface 21bb of peripheral wall 21b of power storage cell 120 has a first wall surface 21bc, a second wall surface 21bd, and a third wall surface 21be. First wall surface 21bc, second wall surface 21bd, and third wall surface 21be are arranged in height direction H. First wall surface 21bc and third wall surface 21be are configured to extend in height direction H. First wall surface 21bc is located closer to lid 22 than third wall surface 21be. First wall surface 21bc is separated away from outer wall surface 21ba in width direction W than third wall surface 21be. Second wall surface 21bd connects one end of first wall surface 21be and one end of third wall surface 21be. Thickness t1 of peripheral wall 21b on the side of bottom wall 21a is smaller than thickness t1 thereof on the side of lid 22. More specifically, in thickness t1 of peripheral wall 21b, thickness t9 between outer wall surface 21ba and third wall surface 21be is smaller than thickness t8 between outer wall surface 21ba and first wall surface 21be.

Thus, electrode assembly 101 in which power storage cell 120 is housed in housing case 20 is pressed by first wall surface 21bc of inner wall surface 21bb, which prevents electrode assembly 101 from vibrating in housing case 20. Thereby, the impact resistance of power storage cell 120 is improved. In addition, since a gap is formed between third wall surface 21be and electrode assembly 101 on the side of bottom wall 21a, a path is secured for the gas generated in housing case 20 to flow to exhaust valve 21ab. As a result, power storage cell 120 can properly discharge the gas generated in housing case 20 to the outside of housing case 20.

### <Third Modification>

Although in power storage cell 120 according to the second modification, it is described that inner wall surface 21bb includes a first wall surface 21bc, a second wall surface 21bd and a third wall surface 21be, the present disclosure is not limited thereto. Inner wall surface 21bb of peripheral wall 21b may include only a second wall surface 21bd and a third wall surface 21be.

Hereinafter, a power storage cell 130, which is a modification of power storage cell 120, will be described. Power storage cell 130 has substantially the same configuration as power storage cell 120 except for the shape of inner wall surface 21bb.

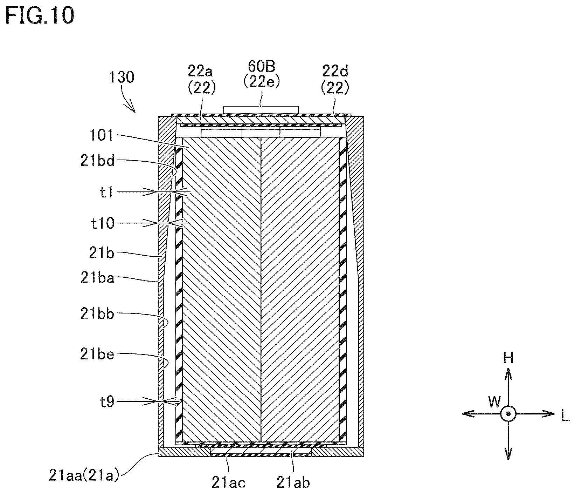

Fig. 10 is a cross-sectional view of power storage cell 130, which is a third modification of the power storage cell according to the embodiment of the present disclosure, and the cross-sectional view being taken along an arrow direction of line V-V at the same position as the cross-sectional view of the power storage cell illustrated in Fig. 3. Inner wall surface 21bb of peripheral wall 21b of power storage cell 130 includes a second wall surface 21bd and a third wall surface 21be. Second wall surface 21bd and third wall surface 21be are configured to extend in height direction H, and one end of second wall surface 21bd is connected to one end of third wall surface 21be. In other words, second wall surface 21bd and third wall surface 21be are arranged in height direction H. Second wall surface 21bd is inclined relative to outer wall surface 21ba and is inclined away from electrode assembly 101 from the side of lid 22 toward the side of bottom wall 21a. Third wall surface 21be is parallel to outer wall surface 21ba. With such a configuration, in thickness t1 of peripheral wall 21b, thickness t10 of peripheral wall 21b between outer wall surface 21ba and second wall surface 21bd decreases from the side of lid 22 toward the side of bottom wall 21a, and thickness t9 of peripheral wall 21b between outer wall surface 21ba and third wall surface 21be remains constant.

Thus, electrode assembly 101 in which power storage cell 130 is housed in housing case 20 is pressed by second wall surface 21bd of inner wall surface 21bb, which prevents electrode assembly 101 from vibrating in housing case 20. Thereby, the impact resistance of power storage cell 130 is improved. In addition, since a gap is formed between third wall surface 21be and electrode assembly 101 on the side of bottom wall 21a, a path is secured for the gas generated in housing case 20 to flow to exhaust valve 21ab. As a result, power storage cell 130 can properly discharge the gas generated in housing case 20 to the outside of housing case 20.

### <Fourth Modification>

Power storage cell 130 according to the third modification may further include an expansion portion. Hereinafter, a power storage cell 140, which is a modification of power storage cell 130, will be described. Power storage cell 140 has substantially the same configuration as power storage cell 120 except for the presence of an expansion portion 21bf.

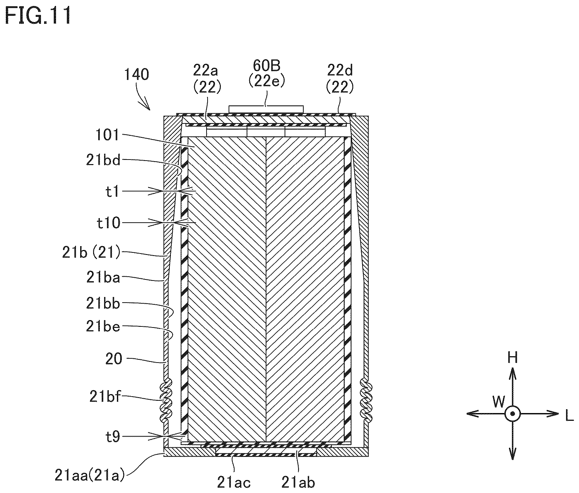

Fig. 11 is a cross-sectional view of power storage cell 140 which is a fourth modification of the power storage cell according to the embodiment of the present disclosure, and the cross-sectional view being taken along an arrow direction of line V-V at the same position as the cross-sectional view of the power storage cell illustrated in Fig. 3. Peripheral wall 21b of power storage cell 140 includes an expansion portion 21bf. Expansion portion 21bf has, for example, a bellows shape. Expansion portion 21bf is located on the side of bottom wall 21a of peripheral wall 21b, and is formed by outer wall surface 21ba and third wall surface 21be.

When the internal pressure of housing case 20 is increased by the gas generated in housing case 20 of power storage cell 140, expansion portion 21bf expands toward the outside of case body 21. Thus, a gap is formed between third wall surface 21be and electrode assembly 101 on the side of bottom wall 21a, and thereby a path is secured for the gas generated in housing case 20 to flow to exhaust valve 21ab. As a result, power storage cell 120 can properly discharge the gas generated in housing case 20 to the outside of housing case 20.

### <Fifth Modification>

In the above embodiment, it is described that thickness t1 of a portion of peripheral wall 21b of power storage cell 100 on the side of bottom wall 21a is thinner than thickness t1 of a portion of peripheral wall 21b on the side of lid 22, but the present disclosure is not limited thereto. For example, thickness t1 of peripheral wall 21b may be uniform. Hereinafter, a power storage cell 150, which is a modification of power storage cell 100, will be described. Power storage cell 150 has substantially the same configuration as power storage cell 100 except for the shape of peripheral wall 21b.

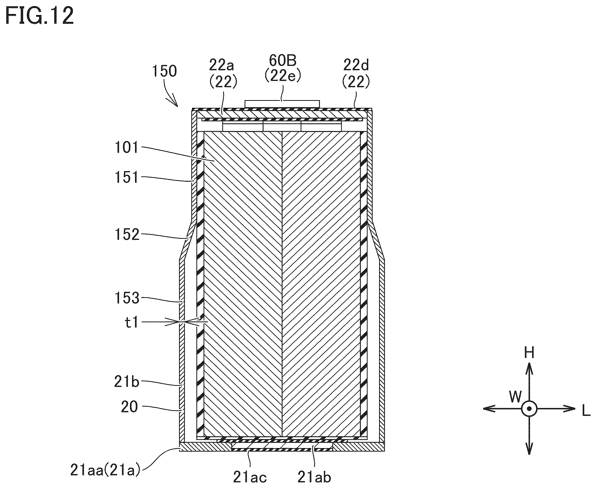

Fig. 12 is a cross-sectional view of power storage cell 150 which is a fifth modification of the power storage cell according to the embodiment of the present disclosure, and the cross-sectional view being taken along an arrow direction of line V-V at the same position as the cross-sectional view of the power storage cell illustrated in Fig. 3. Peripheral wall 21b of power storage cell 150 includes a first wall 151, a second wall 152, and a third wall 153. First wall 151, second wall 152, and third wall 153 are arranged in height direction H. First wall 151 is located closer to both lid 22 and electrode assembly 101 than third wall 153. Second wall 152 connects one end of first wall 151 and one end of third wall 153.

In power storage cell 150, electrode assembly 101 in which power storage cell 150 is housed in housing case 20 is pressed by first wall 151, which prevents electrode assembly 101 from vibrating in housing case 20. Thereby, the impact resistance of power storage cell 150 is improved. In addition, since a gap is formed between third wall 153 and electrode assembly 101 on the side of bottom wall 21a, a path is secured for the gas generated in housing case 20 to flow to exhaust valve 21ab. As a result, power storage cell 150 can properly discharge the gas generated in housing case 20 to the outside of housing case 20.

### <Sixth Modification>

In the above embodiment, it is described that inner wall surface 21bb of power storage cell 100 is inclined relative to outer wall surface 21ba, and thereby thickness t1 of a portion of peripheral wall 21b on the side of bottom wall 21a is smaller than thickness t1 of a portion of peripheral wall 21b on the side of lid 22, but the present disclosure is not limited thereto. For example, as outer wall surface 21ba approaches to inner wall surface 21bb from the side of lid 22 toward the side of bottom wall 21a, thickness t1 may decrease from a portion of peripheral wall 21b on the side of lid 22 toward a portion thereof on the side of bottom wall 21a.

Hereinafter, a power storage cell 160, which is a modification of power storage cell 100, will be described. Power storage cell 160 has substantially the same configuration as power storage cell 100 except for the shape of peripheral wall 21b.

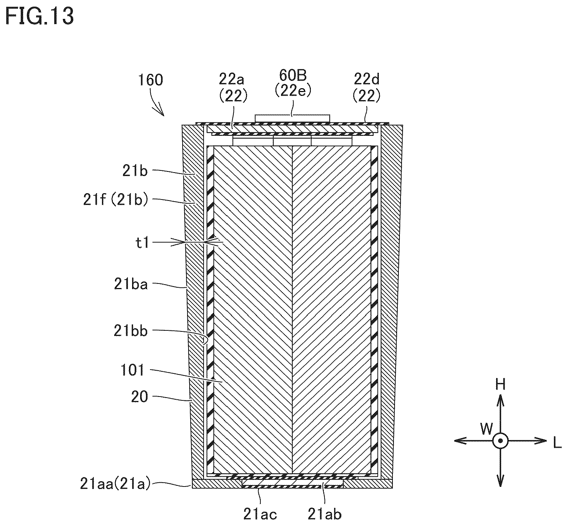

Fig. 13 is a cross-sectional view of power storage cell 160 which is a sixth modification of the power storage cell according to the embodiment of the present disclosure, and the cross-sectional view being taken along an arrow direction of line V-V at the same position as the cross-sectional view of the power storage cell illustrated in Fig. 3. Peripheral wall 21b of power storage cell 160 includes an outer wall surface 21ba and an inner wall surface 21bb. Outer wall surface 21ba and inner wall surface 21bb are configured to extend in height direction H. Inner wall surface 21bb rises from bottom wall 21a in the vertical direction. Outer wall surface 21ba is inclined so as to approach to inner wall surface 21bb from the side of lid 22 toward the side of bottom wall 21a. With such a configuration, thickness t1 decreases from a portion of peripheral wall 21b on the side of lid 22 toward a portion thereof on the side of bottom wall 21a.

When power storage cell 160 is arranged as illustrated in Fig. 1 in length direction L and is constrained in length direction L, first main wall 21e and second main wall 21f of the power storage cells 160 deform so as to fall toward the center of housing case 20. Accordingly, electrode assembly 101 is pressed by peripheral wall 21b on the side of lid 22, which prevents electrode assembly 101 from vibrating in housing case 20. Thereby, the impact resistance of power storage cell 160 is improved. Since a gap is formed between peripheral wall 21b and electrode assembly 101 on the side of bottom wall 21a, a path is secured for the gas generated in housing case 20 to flow to exhaust valve 21ab. As a result, power storage cell 160 can properly discharge the gas generated in housing case 20 to the outside of housing case 20.

### <Seventh Modification>

In the above embodiment, it is described that thickness t1 of a portion of peripheral wall 21b of power storage cell 100 on the side of bottom wall 21a is thinner than a portion thereof on the side of lid 22, but the present disclosure is not limited thereto. For example, thickness t1 of peripheral wall 21b may be uniform, and a convex portion 21bh may be provided on inner wall surface 21bb.

Hereinafter, a power storage cell 170, which is a modification of power storage cell 100, will be described. Power storage cell 170 has substantially the same configuration as power storage cell 100 except for the shape of peripheral wall 21b.

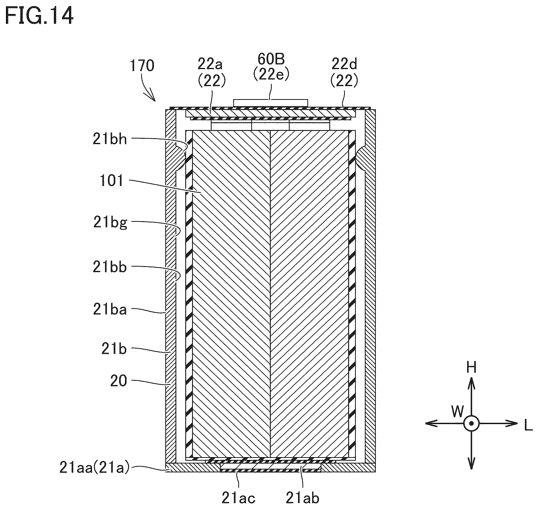

Fig. 14 is a cross-sectional view of power storage cell 170 which is a seventh modification of the power storage cell according to the embodiment of the present disclosure, and the cross-sectional view being taken along an arrow direction of line V-V at the same position as the cross-sectional view of the power storage cell illustrated in Fig. 3. Peripheral wall 21b of power storage cell 170 includes an outer wall surface 21ba and an inner wall surface 21bb. Inner wall surface 21bb has a flat portion 21bg and a convex portion 21bh. Convex portion 21bh protrudes from flat portion 21bg toward electrode assembly 101. Convex portion 21bh is located closer to lid 22 than bottom wall 21a in height direction H.

In power storage cell 170, electrode assembly 101 housed in housing case 20 is pressed by convex portion 21bh, which prevents electrode assembly 101 from vibrating in housing case 20. Thereby, the impact resistance of power storage cell 170 is improved. In addition, since a gap is formed between flat portion 21bg and electrode assembly 101 on the side of bottom wall 21a, a path is secured for the gas generated in housing case 20 to flow to exhaust valve 21ab. As a result, power storage cell 170 can properly discharge the gas generated in housing case 20 to the outside of housing case 20.

### <Eighth Modification>

Although it is described that electrode assembly 101 of power storage cell 170 according to the seventh modification is pressed by convex portion 21bh, the present disclosure is not limited thereto. For example, electrode assembly 101 may be pressed by a bent portion 181 of peripheral wall 21b.

Hereinafter, a power storage cell 180, which is a modification of power storage cell 170, will be described. Power storage cell 180 has substantially the same configuration as power storage cell 170 except for the shape of peripheral wall 21b.

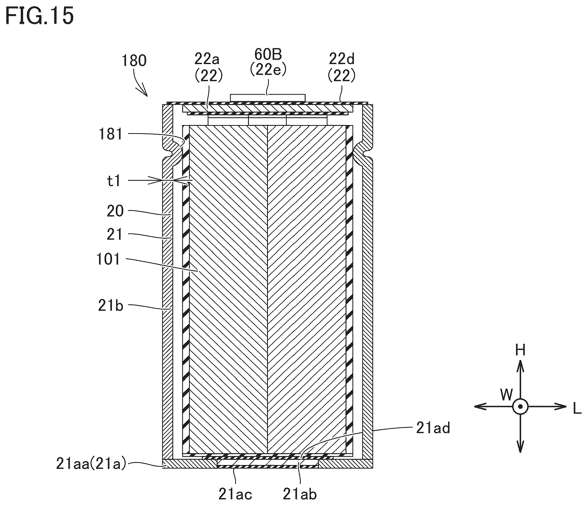

Fig. 15 is a cross-sectional view of power storage cell 180 which is an eighth modification of the power storage cell according to the embodiment of the present disclosure, and the cross-sectional view being taken along an arrow direction of line V-V at the same position as the cross-sectional view of the power storage cell illustrated in Fig. 3. Thickness t1 of peripheral wall 21b of power storage cell 180 is uniform. Peripheral wall 21b has a bent portion 181 closer to lid 22 than bottom wall 21a in height direction H. Bent portion 181 is formed by bending a part of peripheral wall 21b having a uniform thickness toward electrode assembly 101 relative to case body 21.

In power storage cell 180, electrode assembly 101 housed in housing case 20 is pressed by bent portion 181, which prevents electrode assembly 101 from vibrating in housing case 20. Thereby, the impact resistance of power storage cell 180 is improved. In addition, since a gap is formed between peripheral wall 21b and electrode assembly 101 on the side of bottom wall 21a, a path is secured for the gas generated in housing case 20 to flow to exhaust valve 21ab. As a result, power storage cell 180 can properly discharge the gas generated in housing case 20 to the outside of housing case 20.

### <Ninth Modification>

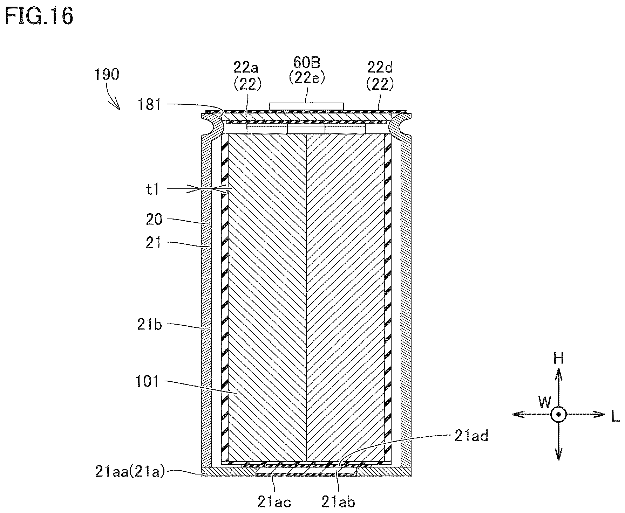

Although it is described that peripheral wall 21b of power storage cell 180 according to the eighth modification has a bent portion 181 closer to lid 22 than bottom wall 21a in height direction H, the present disclosure is not limited thereto. For example, as illustrated in Fig. 16, bent portion 181 may be formed at an end edge of peripheral wall 21b on the side of lid 22 in height direction H. Fig. 16 is a ninth modification of the power storage cell according to the embodiment of the present disclosure, and the cross-sectional view being taken along an arrow direction of line V-V at the same position as the cross-sectional view of the power storage cell illustrated in Fig. 3. Power storage cell 190 has substantially the same configuration as power storage cell 180 except for the position of bent portion 181.

In power storage cell 190, since bent portion 181 is formed at the end edge of peripheral wall 21b on the side of lid 22, bent portion 181 comes into contact with the corner of electrode assembly 101. Accordingly, bent portion 181 can press electrode assembly 101 in height direction H and press the side surface of electrode assembly 101.

### <Tenth Modification>

A power storage cell 200 which includes a modification of bent portion 181 of power storage cell 190 according to the ninth modification will be described. Power storage cell 200 has substantially the same configuration as power storage cell 190 except for the shape of peripheral wall 21b.

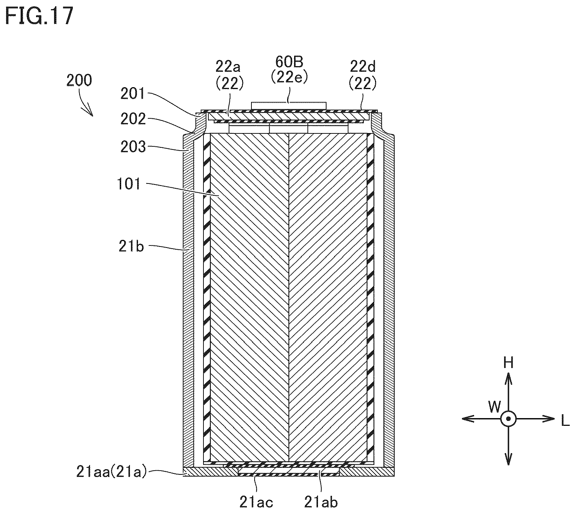

Fig. 17 is a cross-sectional view of power storage cell 200 which is a tenth modification of the power storage cell according to the embodiment of the present disclosure a, and the cross-sectional view being taken along an arrow direction of line V-V at the same position as the cross-sectional view of the power storage cell illustrated in Fig. 3. Peripheral wall 21b includes a fourth wall 201, a fifth wall 202, and a sixth wall 203. Fourth wall 201, fifth wall 202, and sixth wall 203 are arranged in height direction H. Fifth wall 202 is located closer to both lid 22 and electrode assembly 101 than sixth wall 203. Fifth wall 202 connects one end of fourth wall 201 and one end of sixth wall 203, and has an arc shape.

Fifth wall 202 of power storage cell 200 performs the same function as bent portion 181 of power storage cell 190. In other words, fifth wall 202 of peripheral wall 21b of power storage cell 200 comes into contact with the corner of electrode assembly 101. Accordingly, fifth wall 202 can press electrode assembly 101 in height direction H and press the side surface of electrode assembly 101.

### <Eleventh modification>

In the above embodiment, it is described that a path is secured for the gas generated in housing case 20 to flow to exhaust valve 21ab by decreasing thickness t1 of a portion of peripheral wall 21b of power storage cell 100 on the side of bottom wall 21a smaller than a portion thereof on the side of lid 22, but the present disclosure is not limited thereto. For example, an exhaust gas discharge passage may be formed on at least one of first side wall 21c and second side wall 21d, and thereby a path may be secured for the gas generated in housing case 20 to flow to exhaust valve 21ab by the exhaust gas discharge passage.

Hereinafter, a power storage cell 210, which is a modification of power storage cell 100, will be described. Power storage cell 210 has substantially the same configuration as power storage cell 100 except for peripheral wall 21b.

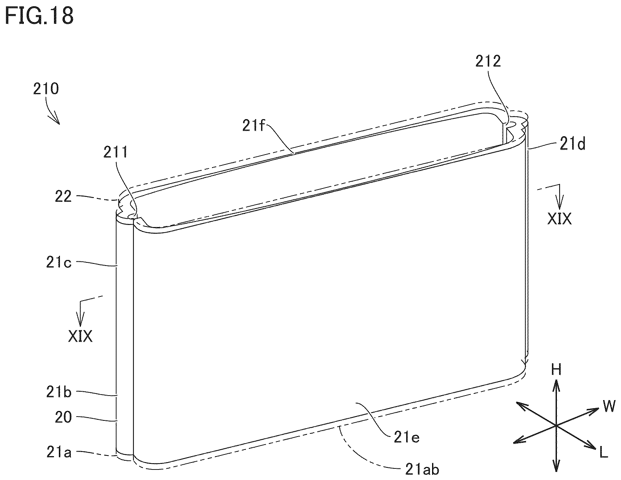

Fig. 18 is a perspective view of a peripheral wall of a power storage cell 210 which is an eleventh modification of the power storage cell according to the embodiment of the present disclosure. Peripheral wall 21b has a first side wall 21c, a second side wall 21d, a first main wall 21e, and a second main wall 21f. First side wall 21c is formed with a first exhaust gas discharge passage 211. Second side wall 21d is formed with a second exhaust gas discharge passage 212. Each of first exhaust gas discharge passage 211 and second exhaust gas discharge passage 212 is configured to extend in height direction H.

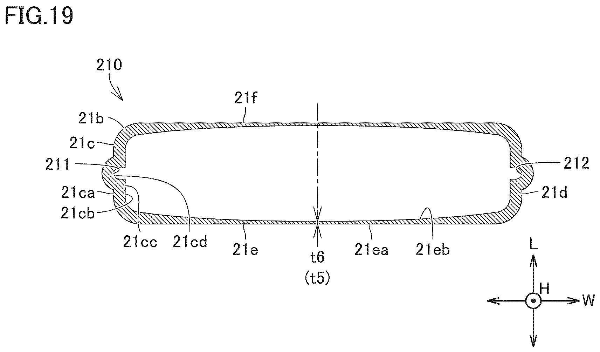

Fig. 19 is a cross-sectional view of the peripheral wall illustrated in Fig. 18 taken along an arrow direction of line XIX-XIX. Since first exhaust gas discharge passage 211 and second exhaust gas discharge passage 212 have substantially the same configuration, first exhaust gas discharge passage 211 will be described below, and second exhaust gas discharge passage 212 will not be described. First side wall 21c has an outer surface 21ca and an inner surface 21cb. Inner surface 21cb has a flat surface portion 21cc and a concave surface portion 21cd. Concave surface portion 21cd protrudes from flat surface portion 21cc toward outer surface 21ca. Concave surface portion 21cd thus formed defines first exhaust gas discharge passage 211.

With reference to Fig. 18 again, first exhaust gas discharge passage 211 is formed from the side of lid 22 to the side of bottom wall 21a. The gas generated in housing case 20 of power storage cell 210 having first exhaust gas discharge passage 211 can flow through first exhaust gas discharge passage 211 to flow to exhaust valve 21ab. In other words, power storage cell 210 can properly discharge the gas generated in housing case 20 to the outside of housing case 20.

### <Twelfth Modification 12>

For example, bottom body 21aa illustrated in Fig. 4 according to the embodiment of the present disclosure may be provided with a protrusion. Hereinafter, a bottom body 21ae, which is a modification of bottom body 21aa of power storage cell 100, will be described.

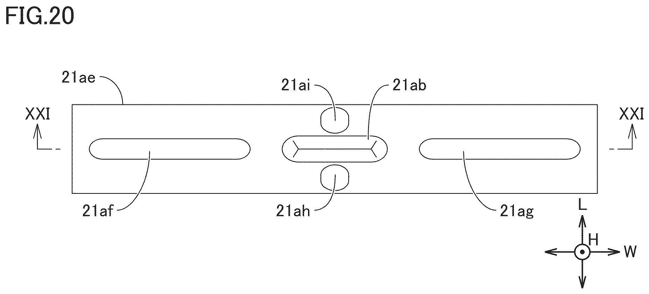

Fig. 20 is a plan view of a modification of the bottom body according to the embodiment of the present disclosure. Fig. 20 is a plan view of bottom body 21ae viewed from the side of lid 22 in the vertical direction. Bottom body 21ae includes a first protrusion 21af, a second protrusion 21ag, a third protrusion 21ah, and a fourth protrusion 21ai. First protrusion 21af and second protrusion 21ag are formed in a central portion of bottom body 21ae in length direction L and configured to extend in width direction W. Third protrusion 21ah and fourth protrusion 21ai are formed in a central portion of bottom body 21ae in width direction W and configured to extend in length direction L.

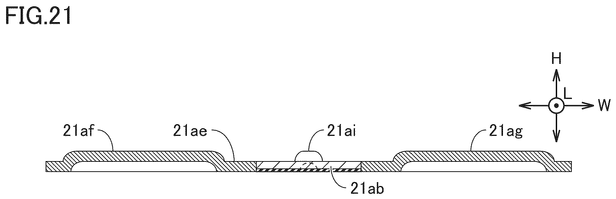

Fig. 21 is a cross-sectional view of bottom body 21ae illustrated in Fig. 20 taken along an arrow direction of line XXI-XXI. First protrusion 21af protrudes from bottom wall 21a toward lid 22 in height direction H. Second protrusion 21ag, third protrusion 21ah, and fourth protrusion 21ai have substantially the same configuration as first protrusion 21af.

Bottom body 21ae includes a first protrusion 21af, a second protrusion 21ag, a third protrusion 21ah, and a fourth protrusion 21ai. When the internal pressure of housing case 20 is increased by the gas generated in housing case 20 of power storage cell 100, bottom body 21ae is prevented from deforming from the inside of housing case 20 toward the outside thereof as compared with bottom body 21aa formed in a flat plate shape. As a result, it is possible to prevent exhaust valve 21ab from cracking at a pressure equal to or lower than a predetermined pressure.

### <Thirteenth Modification>

For example, bottom body 21aa illustrated in Fig. 4 according to the embodiment of the present disclosure may have a protruding portion. Hereinafter, a bottom body 21aj, which is a modification of bottom body 21aa of power storage cell 100, will be described.

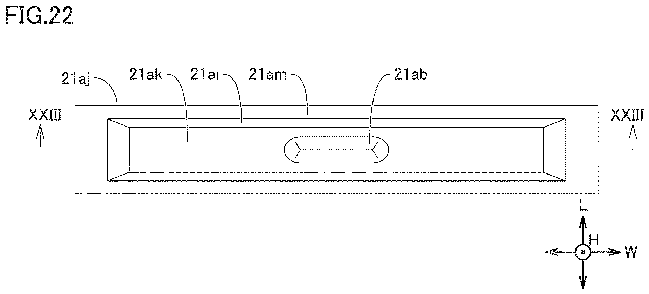

Fig. 22 is a plan view of a modification of the bottom body according to the embodiment of the present disclosure. Fig. 22 is a plan view of bottom body 21aj viewed from the side of lid 22 in the vertical direction. Bottom body 21aj includes a protruding portion 21ak, a connecting portion 21al, and a flat portion 21am. Exhaust valve 21ab is provided on protruding portion 21ak of bottom body 21aj.

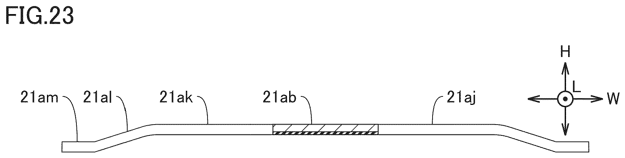

Fig. 23 is a cross-sectional view of bottom body 21aj illustrated in Fig. 22 taken along an arrow direction of line XXIII-XXIII. Protruding portion 21ak is located closer to lid 22 than flat portion 21am in height direction H. Flat portion 21am is configured to surround protruding portion 21ak. Connecting portion 21al connects one end of flat portion 21am and one end of protruding portion 21ak.

In bottom body 21aj, protruding portion 21ak on which exhaust valve 21ab is provided protrudes from flat portion 21am toward lid 22. When the internal pressure of housing case 20 is increased by the gas generated in housing case 20 of power storage cell 100, bottom body 21aj is prevented from deforming from the inside of housing case 20 toward the outside thereof as compared with bottom body 21aa formed in a flat plate shape. As a result, it is possible to prevent exhaust valve 21ab from cracking at a pressure equal to or lower than a predetermined pressure.

### <Fourteenth Modification>

For example, bottom body 21aa illustrated in Fig. 4 according to the embodiment of the present disclosure may include a reinforcing member. Hereinafter, a bottom body 21an, which is a modification of bottom body 21aa of power storage cell 100, will be described.

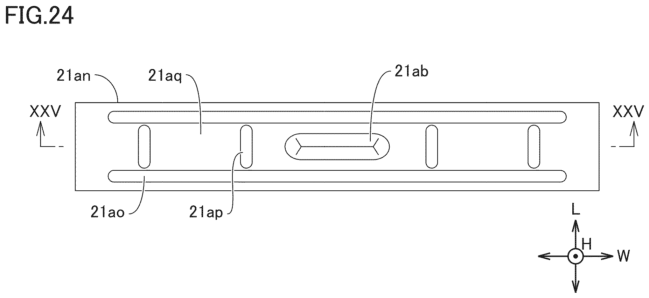

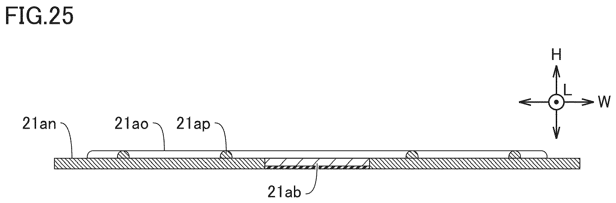

Fig. 24 is a plan view of a modification of the bottom body according to the embodiment of the present disclosure. Fig. 24 is a plan view of bottom body 21an viewed from the side of lid 22 in the vertical direction. Fig. 25 is a cross-sectional view of bottom body 21an illustrated in Fig. 24 taken along taken along an arrow direction of line XXV-XXV. With reference to Fig. 24, bottom body 21an includes a plurality of first reinforcing members 21ao configured to extend in width direction W and a plurality of second reinforcing members 21ap configured to extend in length direction L. With reference to Fig. 25, each of first reinforcing members 21ao and second reinforcing members 21ap is formed to protrude from flat portion 21aq of bottom body 21an toward lid 22.

Bottom body 21an includes a plurality of first reinforcing members 21ao and a plurality of second reinforcing members 21ap. When the internal pressure of housing case 20 is increased by the gas generated in housing case 20 of power storage cell 100, bottom body 21an is prevented from deforming from the inside of housing case 20 toward the outside thereof as compared with bottom body 21aa formed in a flat plate shape. As a result, it is possible to prevent exhaust valve 21ab from cracking at a pressure equal to or lower than a predetermined pressure.

It should be understood that the embodiments and the modifications disclosed herein have been presented for the purpose of illustration and description but not limited in all aspects. It is intended that the scope of the present disclosure is not limited to the description above but defined by the scope of the claims and encompasses all modifications equivalent in meaning and scope to the claims.

## Claims

1. A power storage device comprising:
an electrode assembly (101);
a housing case (20) that houses the electrode assembly; and
an exhaust valve (21ab) that is formed on the housing case, wherein
the housing case includes a first end plate (22), a second end plate (21a), and a peripheral wall (21b) provided between the first end plate and the second end plate,
a portion of the peripheral wall on the side of the second end plate is thinner than a portion thereof on the side of the first end plate, and
the exhaust valve is formed on the second end plate.

2. The power storage device according to claim 1, wherein
the peripheral wall has an outer wall surface (21ba) and an inner wall surface (21bb), and
the inner wall surface is inclined relative to the outer wall surface.

3. The power storage device according to claim 1 or claim 2, wherein
the thickness of the peripheral wall is greater than the thickness of the second end plate.

4. The power storage device according to claim 1 or claim 2, wherein
the peripheral wall includes a first side wall (21c), a second side wall (21d), a first main wall (21e), and a second main wall (21f),
the first side wall and the second side wall are spaced apart from each other in a width direction,
the first main wall connects one end of the first side wall and one end of the second side wall,
the second main wall connects the other end of the first side wall and the other end of the second side wall, and
the thickness of the first main wall is smaller than the thickness of the first side wall.

5. The power storage device according to claim 1 or claim 2, wherein
the peripheral wall includes a first side wall (21c), a second side wall (21d), a first main wall (21e), and a second main wall (21f),
the first side wall and the second side wall are spaced apart from each other in a width direction,
the first main wall connects one end of the first side wall and one end of the second side wall,
the second main wall connects the other end of the first side wall and the other end of the second side wall, and
a central portion of the first main wall in the width direction is thinner than a portion thereof on the side of the first side wall.

6. The power storage device according to claim 1 or claim 2, wherein
the power storage device (2A) is disposed on a bottom surface (2Ba) of a vehicle, and
the power storage device is disposed in such a manner that the first end plate faces the bottom surface of the vehicle and the second end plate faces the ground surface.

7. The power storage device according to claim 1 or claim 2, wherein the first end plate is thicker than the second end plate.

8. The power storage device according to claim 1 or claim 2, wherein the first end plate is provided with an electrode terminal (22e).

9. The power storage device according to claim 1 or claim 2, wherein the second end plate and the peripheral wall are formed of different members.

10. A power storage device comprising:
an electrode assembly (101);
a housing case (20) that houses the electrode assembly; and
an exhaust valve (21ab) that is formed on the housing case, wherein
the housing case includes a first end plate (22), a second end plate (21a), and a peripheral wall (111) provided between the first end plate and the second end plate,
the peripheral wall is formed to rise from the second end plate and is inclined toward the inside of the housing case, and
the exhaust valve is formed on the second end plate.
